# EUROPÄISCHE PATENTSCHRIFT

(11) **EP 2 985 545 B1**
(45) Veröffentlichungstag und Bekanntmachung des Hinweises auf die Patenterteilung: **22.04.2020**
(21) Anmeldenummer: 14004131.0
(22) Anmeldetag: 09.12.2014
(51) Int. Cl.: F24F 13/30, F24F 5/00, F24F 12/00, F24F 13/22

(54) **Anlage mit Plattenwärmetauschern zur Entfeuchtung eines Luftstroms**
Assembly with plate heat exchanger for dehumidification of an airflow
Installation dotée d'échangeurs de chaleur à plaques pour déshumidification d'un flux d'air

(30) Priorität: 28.07.2014 DE 102014010924
(43) Veröffentlichungstag der Anmeldung: 17.02.2016
(73) Patentinhaber: FläktGroup Deutschland GmbH, 44625 Herne (DE)
(72) Erfinder: Linck, Andreas, 45699 Herten (DE)
(74) Vertreter: Cohausz Hannig Borkowski Wißgott

(56) Entgegenhaltungen:
- EP-A2- 2 708 829
- WO-A1-2007/095984
- DE-A1- 4 243 429
- GB-A- 2 296 968

## Beschreibung

Die Erfindung betrifft eine Anlage zum Übertragen der Wärmeenergie aus der warmen feuchten Abluft eines Gebäudes auf die in das Gebäude strömende Außenluft mit mindestens zwei Kreuzstrom-Plattenwärmeübertragern, die von einem der beiden Luftströme im Wesentlichen waagerecht durchströmt werden und die von dem anderen Luftstrom quer oder senkrecht von oben nach unten oder von unten nach oben durchströmt werden.

Es sind Zentralgeräte für die Gebäudeklimatisierung bekannt, in deren Gehäuse die warme feuchte Abluft eines Gebäudes wie z. B. die eines Schwimmbades unten eingeführt wird und einen ersten Plattenwärmeübertrager von unten nach oben und einen zweiten Plattenwärmeübertrager von oben nach unten durchströmt. Hierbei erzeugt die warme feuchte Abluft innerhalb des ersten Plattenwärmeübertragers Wassertropfen, die nach unten streben, denen aber der senkrecht nach oben strömende Luftstrom entgegensteht, so dass ein ausreichendes Entfeuchten nicht gewährleistet ist. Vielmehr wird ein Teil der Tropfen in den zweiten Plattenwärmeübertrager mitgerissen, um dort die Wärmeübertragungsleistung zu mindern.

Die WO 2007/095984 A1 offenbart eine Anlage zum Übertragen von Wärme zwischen einem warmen feuchten Abluftstrom eines Gebäudes und einem in das Gebäude strömenden Außenluftstrom. Dabei durchströmt der Abluftstrom einen ersten und einen zweiten Kreuzstrom-Plattenwärmetauscher in schräger Richtung von unten nach oben. Der Außenluftstrom durchströmt dabei zuerst den zweiten Kreuzstrom-Plattenwärmetauscher schräg von oben nach unten und danach den ersten Kreuzstrom-Plattenwärmetauscher schräg von unten nach oben. Dabei besteht die Gefahr, dass ausgeschiedene Tropfen aus dem Abluftstrom von diesem entgegen der Schwerkraft mitgerissen werden.

Aufgabe der Erfindung ist es, eine Anlage der eingangs genannten Art so zu verbessern, dass bei einfacher Konstruktion und ohne zusätzlichen technischen Aufwand eine bessere Entfeuchtung erreicht wird.

Diese Aufgabe wird erfindungsgemäß dadurch gelöst, dass der Abluftstrom durch die beiden Plattenwärmeübertrager im Wesentlichen waagerecht geführt ist, wobei der Abluftstrom in dem von ihm zuerst erreichten ersten Plattenwärmeübertrager waagerecht und durch den von ihm als zweites erreichten zweiten Plattenwärmeübertrager in einem Winkel von α = 10 bis 45 Grad gegenüber der Waagerechten abwärtsgeneigt geführt ist, und dass der Außenluftstrom durch den zuerst von ihm zuerst durchströmten zweiten Plattenwärmeübertrager schräg von oben nach unten und durch den danach folgenden ersten Plattenwärmeübertrager von unten nach oben geführt ist.

Bei dieser Lösung strömt die Abluft in keinem der beiden Plattenwärmeübertrager senkrecht nach oben, sondern ist stets waagerecht und/oder leicht nach unten gerichtet, so dass der fallenden Bewegung der Tropfen ein Luftstrom nicht entgegensteht und damit eine sichere und weitgehende Entfernung der Tropfen erreicht wird.

Vorzugsweise wird vorgeschlagen, dass unterhalb der tiefsten Stelle des zweiten Plattenwärmeübertragers eine Wasserauffangwanne angeordnet ist. Ferner sollte außerhalb der Plattenwärmeübertrager der Außenluft-/Zuluftstrom innerhalb des Gehäuses der Anlage oberhalb des Abluft-/Fortluftstroms liegen.

In einem nicht zur Erfindung gehörendem Beispiel wird vorgeschlagen, dass der Abluftstrom (ABL) durch einen zuerst durchströmten ersten Plattenwärmeübertrag schräg nach unten und durch einen danach durchströmten zweiten Plattenwärmeübertrager von unten nach oben geführt ist, und dass der Außenluftstrom (AUL) im Wesentlichen waagerecht durch die beiden Plattenwärmeübertrager geführt ist, wobei dieser durch den zuerst durchströmten zweiten Plattenwärmeübertrager waagerecht und durch den danach durchströmten ersten Plattenwärmeübertrager schräg nach unten geführt ist.

Bei dieser Lösung strömt die Abluft im zuerst durchströmten ersten Plattenwärmeübertrager schräg von oben nach unten, so dass den nach unten drängenden Wassertropfen ein Luftstrom nicht entgegensteht, sondern die Tropfen nach unten mitgeführt werden, um früh leicht entfernt werden zu können.

Vorzugsweise wird vorgeschlagen, dass die Abwärtsneigung des ersten Plattenwärmeübertragers einen Winkel (α) von 10 bis 45 Grad gegenüber der Waagrechten aufweist. Auch kann unterhalb der tiefsten Stelle des ersten Plattenwärmeübertragers eine Wasserauffangwanne angeordnet sein.

Weitere Vorteile beider Lösungen sind neben der besseren Entfeuchtung die Kondensatwanne kleiner gestalten zu können und durch die verbesserte Zugänglichkeit der Verbindungsstellen der beiden Plattenwärmeübertrager eine sichere Abdichtung gegenüber dem zweiten Luftstrom zu erzielen.

Ein Ausführungsbeispiel der Erfindung und ein nicht zur Erfindung gehörendes Beispiel sind in den Zeichnungen in senkrechten Längsschnitten dargestellt und werden im Folgenden näher beschrieben.
Fig. 1 zeigt ein Ausführungsbeispiel der Erfindung.
Fig. 2 zeigt ein nicht zur Erfindung gehörendes Beispiel.

Das Zentralgerät zur Gebäudeklimatisierung insbesondere für Räume mit hoher Luftfeuchtigkeit weist ein längliches kubisches Außengehäuse auf, das zwei übereinander liegende waagerechte Luftkanäle 1, 2 bildet. Am ersten Gehäuseende 3 tritt die Außenluft AUL in den oberen Kanal 1 ein und tritt nach Durchströmen beider Plattenwärmeübertrager und des oberen Kanals 1 am zweiten Gehäuseende 4 oben als Zuluft ZUL aus. Die aus dem Gebäude kommende Abluft ABL tritt am zweiten Gehäuseende 4 in den unteren Kanal 2 ein und tritt nach Durchströmen beider Plattenwärmeübertrager und des unteren Kanals 2 am ersten Gehäuseende 3 unten als Fortluft FOL aus.

Innerhalb beider Luftkanäle 1, 2 befinden sich Lüfter bzw. Gebläse, Filter und Klappenventile, auf die hier nicht weiter eingegangen wird.

Etwa im mittleren Bereich beider Luftkanäle 1, 2 sind zwei Kreuzstrom-Plattenwärmeübertrager I, II zwischengeschaltet, von den ein erster Plattenwärmeübertrager I von der Abluft ABL zuerst und waagerecht durchströmt ist. Am ersten Plattenwärmeübertrager I ist unmittelbar und damit direkt der zweite Plattenwärmeübertrager II derart leicht nach unten abgekippt befestigt, dass seine Ablufteingänge in Höhe der Abluftausgänge des ersten Plattenwärmeübertragers I liegen und die Abluftkanäle innerhalb des zweiten Plattenwärmeübertragers II schräg nach unten gerichtet sind, so dass die Abluftkanäle bzw. deren Hauptströmungsrichtung mit der Waagerechten einen Winkel α von 10 bis 45 Grad bilden. Bei dieser Anordnung liegen die Ablufteingänge beider Plattenwärmeübertrager I, II in ihrer Höhe etwa mittig zwischen den zwei Luftkanälen 1, 2 und der Abluftausgang des zweiten Plattenwärmeübertragers II liegt in Höhe des unteren Luftkanals 2.

Die Abluft ABL durchströmt damit zuerst einen ersten Bereich 2a des unteren Luftkanals 2, um dann hochgeführt zu werden zum Ablufteingang des ersten Plattenwärmeübertragers I. Sie durchströmt dann den ersten Plattenwärmeübertrager I waagerecht und wird durch den darauf folgenden zweiten Plattenwärmeübertrager II leicht schräg nach unten geführt, um in beiden Plattenwärmeübertragern I, II die Wärmeenergie an die Außenluft AUL abzugeben. Bei diesem Abkühlen bilden sich in der Abluft Wassertropfen, die vom Abluftstrom in den Plattenwärmeübertrager I, II mitgeführt werden, um am unteren Ende des zweiten Plattenwärmeübertragers in eine Auffangwanne 5 zu gelangen. Die abgekühlte Abluft ABL gelangt dann in den zweiten Bereich 2b des unteren Luftkanals 2, um dann als Fortluft FOL in die Umgebung auszutreten.

Die Außenluft AUL durchströmt zuerst einen ersten Bereich 1a des oberen Luftkanals 1, um dann den zweiten Plattenwärmeübertrager II schräg von oben nach unten und darauf den ersten Plattenwärmeübertrager I von unten nach oben zu durchströmen, um darauf in den zweiten Bereich 1b des oberen Kanals 1 zu gelangen und als Zuluft ZUL in das Gebäude auszutreten.

Bei der erfindungsgemäßen Ausführung ist wesentlich, dass die Abluft innerhalb der beiden Plattenwärmeübertrager I, II und besonders innerhalb des ersten Plattenwärmeübertragers I nicht von unten nach oben geführt wird, so dass keine Abluftströmung besteht, durch die in der Abluft entstandene Wassertropfen gegen ihre Fallrichtung nach oben gerissen werden, um dadurch an einem weitgehenden Ausscheiden gehindert zu werden. Die waagerechte Führung der Abluft ABL im ersten Plattenwärmeübertrager I und die schräg nach unten Führung im zweiten Plattenwärmeübertrager II führt zu einer optimalen Entfeuchtung der Abluft.

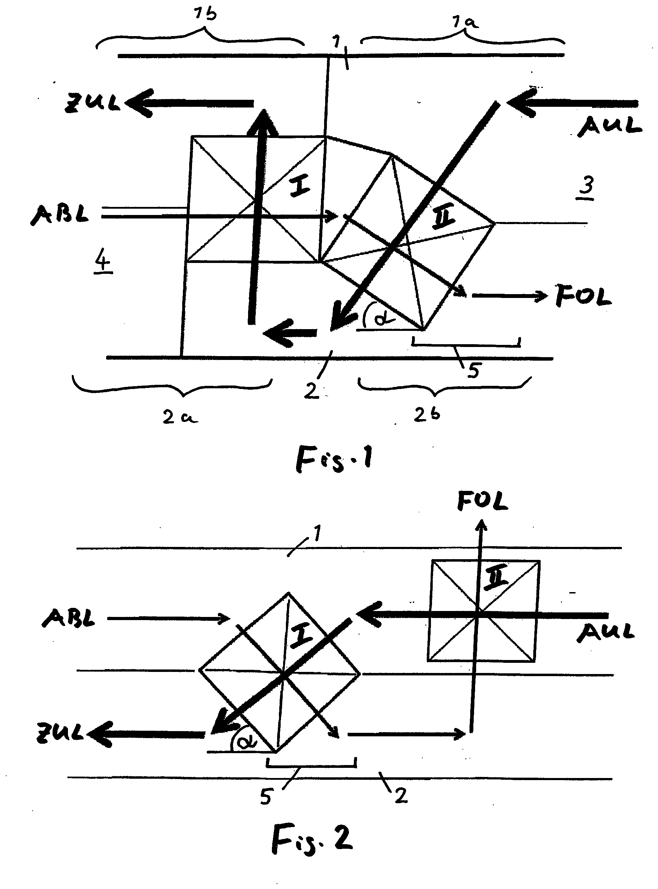

Die zweite Ausführung nach Fig. 2 unterscheidet sich von der ersten dadurch, dass die oben in den oberen Kanal 1 eintretende Abluft (ABL) durch den ersten Plattenwärmeübertrager I schräg nach unten geführt ist, so dass entstehende Wassertropfen mit nach unten geführt werden und in die Wanne 5 gelangen. Die Abluft wird dann durch den unteren Kanal 2 zur Unterseite des zweiten Plattenwärmeübertragers II geführt, um diesen von unten nach oben zu durchströmen.

Die Außenluft (AUL) tritt in den oberen Kanal 1 ein und durchströmt den zweiten Plattenwärmeübertrager II waagerecht, um dann durch den oberen Kanal zum ersten Plattenwärmeübertrager I geführt zu werden und diesen schräg von oben nach unten zu durchströmen und über den unteren Kanal 2 auszutreten.

Statt zweier Kreuzstrom-Plattenwärmeübertragern können in allen Ausführungen auch drei oder mehr insbesondere auch parallel nebeneinander angeordnet werden, solange die Abluft in diesen nicht aufwärts strömt.

## Patentansprüche

1. Anlage zum Übertragen der Wärmeenergie aus dem warmen feuchten Abluftstrom (ABL) eines Gebäudes auf die in das Gebäude strömende Außenluft (AUL) mit mindestens zwei Kreuzstrom-Plattenwärmeübertragern (I, II), die im bestimmungsgemäßen Gebrauch von einem der beiden Luftströme im Wesentlichen waagerecht durchströmt werden und die von dem anderen Luftstrom quer und damit im Wesentlichen senkrecht von oben nach unten oder von unten nach oben durchströmt werden, wobei der Abluftstrom (ABL) durch die beiden Plattenwärmeübertrager (I, II) im Wesentlichen waagerecht geführt ist, wobei der Abluftstrom (ABL) in dem von ihm zuerst erreichten ersten Plattenwärmeübertrager (I) waagerecht und durch den von ihm als zweites erreichten zweiten Plattenwärmeübertrager (II) in einem Winkel von α = 10 bis 45 Grad gegenüber der Waagerechten abwärtsgeneigt geführt ist, und dass der Außenluftstrom (AUL) durch den zuerst von ihm durchströmten zweiten Plattenwärmeübertrager (II) schräg von oben nach unten und durch den danach folgenden ersten Plattenwärmeübertrager (I) von unten nach oben geführt ist.

2. Anlage nach Anspruch 1, **dadurch**
**gekennzeichnet, dass** unterhalb der tiefsten Stelle des zweiten Plattenwärmeübertragers (II) eine Wasserauffangwanne (5) angeordnet ist.

## Claims

1. System for transferring the heat energy from the warm, humid exhaust-air stream (ABL) of a building to the external air (AUL) flowing into the building, having at least two cross-flow plate heat exchangers (I, II) which, in intended use, are flowed through substantially horizontally by one of the two air streams and which are flowed through transversely and thus substantially perpendicularly from top to bottom or from bottom to top by the other air stream, wherein the exhaust-air stream (ABL) is conducted substantially horizontally through the two plate heat exchangers (I, II), wherein the exhaust-air stream (ABL) is conducted horizontally in the first plate heat exchanger (I), which it reaches first, and is conducted in a downwardly inclined manner through the second plate heat exchanger (II), which it reaches second, at an angle of α = 10 to 45 degrees in relation to the horizontal, and in that the external air stream (AUL) is conducted obliquely from top to bottom through the second plate heat exchanger (II), which it flows through first, and is conducted from bottom to top through the subsequent first plate heat exchanger (I).

2. System according to Claim 1, **characterized in that** a water collecting trough (5) is arranged below the deepest point of the second plate heat exchanger (II).

## Revendications

1. Installation de transfert d'énergie thermique depuis le flux d'air d'évacuation (ABL) humide et chaud d'un bâtiment à l'air extérieur (AUL) entrant dans le bâtiment, comprenant au moins deux échangeurs de chaleur à plaques à courants croisés (I, II), qui sont parcourus essentiellement horizontalement par l'un des deux flux d'air lors d'une utilisation conforme, et qui sont parcourus par l'autre flux d'air et donc essentiellement verticalement de haut en bas ou de bas en haut, le flux d'air d'évacuation (ABL) étant guidé essentiellement horizontalement à travers les deux échangeurs de chaleur à plaques (I, II), le flux d'air d'évacuation (ABL) étant guidé horizontalement dans le premier échangeur de chaleur à plaques (I) qu'il atteint en premier et à travers le deuxième échangeur de chaleur à plaques (II) qu'il atteint en second, de manière inclinée vers le bas suivant un angle α = 10 à 45 degrés par rapport à l'horizontale, et en ce que le flux d'air extérieur (AUL) est guidé à travers le deuxième échangeur de chaleur à plaques (II) qu'il traverse en premier, obliquement de haut en bas et à travers le premier échangeur de chaleur à plaques suivant (I) de bas en haut.

2. Installation selon la revendication 1, **caractérisée en ce qu'**en dessous du point le plus bas du deuxième échangeur de chaleur à plaques (II) est disposé un bac de collecte d'eau (5).
